# EUROPÄISCHE PATENTANMELDUNG

(11) **EP 3 187 256 A1**
(43) Veröffentlichungstag der Anmeldung: **05.07.2017**
(21) Anmeldenummer: 15203020.1
(22) Anmeldetag: 29.12.2015
(51) Int. Cl.: B01J 19/00, B01J 19/18, B01J 19/24, C10G 31/06, C10G 31/10, C10G 27/04

(54) **ANLAGE ZUR BEHANDLUNG VON ROHÖL**

(71) Anmelder: AVARUS Suisse Holding AG, 6052 Hergiswil NW (CH)
(72) Erfinder: Schüler, Rolf, 85258 Weichs (DE)
(74) Vertreter: Puschmann Borchert Bardehle Patentanwälte Partnerschaft mbB

(57) **Zusammenfassung**

Eine Anlage zur Behandlung von Rohöl umfasst einen Vorratsbehälter (2) für das Rohöl und einen oder mehrere Vorratsbehälter (4,6) für eine oder mehrere Zugabe-Komponente(n), ausgewählt aus Ozon, Wasserstoffperoxid, Methangas, Biogas und Erdgas" der mit einer ersten Kavitationsreaktoreinrichtung (8) verbunden sind, in der eine Emulsionsbildung und Oxidation stattfindet. Die erste Kavitationsreaktoreinrichtung (8) ist mit einer ersten Zentrifuge (10) verbunden, in der das von der ersten Kavitationsreaktoreinrichtung (8) abgegebene Produkt zentrifugiert wird. Die erste Zentrifuge (10) ist mit einem Vorratsbehälter (12) für das oxidierte Produkt verbunden, der ebenso wie ein Vorratsbehälter (14) für ein polares Lösungsmittel mit einer zweiten Kavitationsreaktoreinrichtung (16) verbunden sind, in der eine Emulsionsbildung und Extraktion stattfindet. Die zweite Kavitationsreaktoreinrichtung (16) ist mit einer zweiten Zentrifuge (18) verbunden, in der das oxidierte Produkt entschwefelt wird und die mit einem Vorratsbehälter (20) für das entschwefelte Produkt und mit einer Destillationseinrichtung (20) verbunden ist, in der das entschwefelte Produkt weiterverarbeitet wird.

## Beschreibung

Die Erfindung betrifft eine Anlage zur Behandlung von Rohöl, insbesondere zur Verminderung des Schwefelgehalts des Rohöls.

Es sind Anlagen zur Behandlung von Rohöl und der Reduzierung des Schwefelgehalts bekannt, bei denen dem Rohöl Ozon oder Wasserstoffperoxid zugeführt und damit verwischt wird, um die in dem Rohöl enthaltenen Schwefelverbindungen in Sulfon umzusetzen, die über eine Zentrifuge abgetrennt werden können. Das Problem bei diesen Anlagen besteht darin, dass es außerordentlich schwierig ist, das Ozon oder das Wasserstoffperoxid mit einem vertretbaren Wirkungsgrad in das Rohöl einzumischen, sodass die Reaktion zwischen der zugegebenen Komponente und den Schwefelverbindungen in dem Rohöl nur unzureichend stattfindet.

Der Erfindung liegt daher die Aufgabe zu Grunde, eine Anlage zur Verfügung zu stellen, die eine intensive Vermischung der Bestandteile des Rohöls bewirkt, für eine damit verbundene, weitergehende Umsetzung der Schwefelverbindungen mit der zugegebenen Komponenten sorgt und auch weitere Komponenten, die mit der oder den zugegebenen Komponenten reagieren, weitgehend zu entfernen.

Dazu dient die erfindungsgemäße Anlage zur Behandlung von Rohöl, bei der ein Vorratsbehälter für das Rohöl und ein oder mehrere Vorratsbehälter für eine oder mehrere Zugabe-Komponente(n), ausgewählt aus Ozon, Wasserstoffperoxid, Methangas, Biogas und Erdgas, mit einer ersten Kavitationsreaktoreinrichtung verbunden sind, in der eine Emulsionsbildung und Oxidation stattfindet, bei der die erste Kavitationsreaktoreinrichtung mit einer ersten Zentrifuge verbunden ist, in der das von der ersten Kavitationsreaktoreinrichtung abgegebene Produkt zentrifugiert wird, bei der die erste Zentrifuge mit einem Vorratsbehälter für das oxidierte Produkt verbunden ist, bei der der Vorratsbehälter für das oxidierte Produkt und ein Vorratsbehälter für ein polares Lösungsmittel mit einer zweiten Kavitationsreaktoreinrichtung verbunden sind, in der eine Emulsionsbildung und Extraktion stattfindet, bei der die zweite Kavitationsreaktoreinrichtung mit einer zweiten Zentrifuge verbunden ist, in der das Produkt entschwefelt wird und die mit einem Vorratsbehälter für das entschwefelte Produkt und mit einer Destillationseinrichtung verbunden ist, in der das entschwefelte Produkt weiterverarbeitet wird.

Eine vorteilhafte Ausgestaltung der erfindungsgemäßen Anlage ist dadurch gekennzeichnet, dass die Destillationseinrichtung mit einem Speicherbehälter für Sulfone und mit dem Vorratsbehälter für das polare Lösungsmittel verbunden ist, wobei in dem Speicherbehälter das abgetrennte Sulfon gespeichert und das in der Destillationseinrichtung abgetrennte polare Lösungsmittel in den Vorratsbehälter für das polare Lösungsmittel zurückgeführt wird.

Eine weitere vorteilhafte Ausgestaltung der erfindungsgemäßen Anlage ist dadurch gekennzeichnet, dass die erste Zentrifuge über eine Rückführungsleitung mit einer Recyclingschleife für die Zugabe-Komponente verbunden ist, die ihrerseits zu dem Vorratsbehälter für die Zugabe Komponente führt.

Kavitationsreaktoreinrichtung zum Behandeln von fließfähigen Substanzen, wobei der Kavitationsreaktoreinrichtung wenigstens zwei Reaktionskomponenten zugeführt, gemischt und zur Reaktion gebracht werden, sind an sich bekannt.

DE 20 2010 000 075 U1 zeigt beispielsweise eine Vorrichtung zur Behandlung von fließfähigen Substanzen, wobei dem Kavitationsreaktor wenigstens zwei Reaktionskomponenten zugeführt, mittels turbulenter Strömungen bzw. Kavitation gemischt und zur Reaktion gebracht werden. Die Vorrichtung hat ein Gehäuse, in dem in Strömungsrichtung eine Zulaufdüse, die die zugeführte Haupt-Komponente als mittig in dem Gehäuse verlaufenden Strahl in Strömungsrichtung abgibt, und ein der Zulaufdüse mittig gegenüberliegender Düsenkopf angeordnet sind, der Kanäle zur Abgabe einer Zugabe-Komponente entgegen der Strömungsrichtung der Haupt-Komponente aufweist, wobei durch Beabstandung der Zulaufdüse von dem Düsenkopf ein Reaktionsraum in dem Gehäuse gebildet ist. Das Gehäuse ist als Rohr ausgebildet, das im Bereich des Düsenkopfes eine Verengung aufweist und in dem die Zulaufdüse, die eine sich in Strömungsrichtung verengende, vorzugsweise konische, Wand aufweist, angeordnet ist. Der Düsenkopf hat mehrere Kanäle, deren Mündungen unter unterschiedlichen radialen Abständen zu einer Mittelachse des Düsenkopfes liegen, und auf der dem Reaktionsraum zugewandten Seite der Zulaufdüse in Abstand dazu eine mit seitlichen Öffnungen versehene, vorzugsweise ebenfalls konische, Trennwand mit einer Austrittsöffnung vor der Düsenöffnung der Zulaufdüse angeordnet ist, wobei die Austrittsöffnung der Trennwand größer ist als die Düsenöffnung der Zulaufdüse.

Hydrodynamische Durchflussreaktoren, die auf der Basis von Kavitation arbeiten, sind auch aus der DE 103 10 442 A1 bekannt, die durch eine entsprechende Anordnung von schwer umströmbaren Körpern als Superkavitationsreaktoren ausgebildet werden können. Hierbei handelt es sich meist um statische Bauteile, die durch Versuche für die jeweiligen festen, flüssigen und/oder gasförmigen Strömungs-Komponenten optimiert werden müssen. Eine Regulierungsfunktion wird dann durch Variation des Vordrucks bzw. Verschiebung der Turbulenz erzeugenden Elemente erreicht. Bei diesen hydrodynamischen Reaktoren nach dem Stand der Technik ist daher die Auslegung und die Handhabung umständlich, und den Gegebenheiten diverser Anwendungen kann nur begrenzt Rechnung getragen werden.

Bei den vorstehend genannten Kavitationsreaktoreinrichtungen zum Behandeln von fließfähigen Substanzen lässt jedoch der Wirkungsgrad der Umsetzung zwischen den Reaktionskomponenten zu wünschen übrig.

Dazu umfasst eine erste und/oder eine zweite Kavitationsreaktoreinrichtung einen ersten Kavitationsreaktor mit einem ersten, rohrförmigen Gehäuse, mit dem in Strömungsrichtung stromab eine Zulaufeinrichtung verbunden ist, die eine zugeführte Haupt-Komponente als mittig in dem Gehäuse verlaufenden Strahl in Strömungsrichtung abgibt, und in dem ein der Zulaufeinrichtung mittig gegenüberliegender Düsenkopf angeordnet sind, der mehrere Kanäle aufweist, deren Mündungen unter unterschiedlichen radialen Abständen zu einer Mittelachse des Düsenkopfes liegen und durch die wenigstens eine Zugabe-Komponente entgegen der Strömungsrichtung der Haupt-Komponente zuzuführen ist, wobei durch die Beabstandung der Zulaufeinrichtung von dem Düsenkopf (6) ein Reaktionsraum in dem Gehäuse gebildet ist.

Durch den ersten Kavitationsreaktor wird ein Gegenstromsystem verwirklicht, in dem die von der Zulaufeinrichtung abgegebene Strömung auf den Düsenkopf auftrifft und sodann entgegen der Hauptströmungsrichtung, d. h. in Richtung auf die Zulaufeinrichtung, zurückgeworfen wird, wobei die Komponente, die durch die Kanäle in dem Düsenkopf in das System eingeführt wird, der Strömung eine zusätzliche Kraftkomponente in Richtung auf die Zulaufeinrichtung erteilt. Da die Mündungen der Kanäle unterschiedliche radiale Abstände von der Mittelachse des Düsenkopfes haben, wirkt die durch das aus den Kanälen austretende Strömungsmittel erteilte Kraftkomponente großflächig, und es findet eine innige Vermischung der beiden Komponenten in dem Reaktionsraum statt, was die Behandlung der einen Komponenten, beispielsweise Rohöl, durch die andere Komponente, beispielsweise Methan, erst ermöglicht oder zumindest erheblich beschleunigt. Dabei kann das Rohöl sowohl von Verunreinigungen befreit als auch aufbereitet werden durch Umsetzung des Gases in zusätzlichen Treibstoff, wobei die Aufbereitung durch Kavitation den bisherigen Verfahren zur Aufbereitung von Rohöl weit überlegen ist. Die Effizienz der Vorrichtung wird insbesondere durch die hohe Turbulenz in den Strömungen und damit durch Kavitation in einer solchen Weise erhöht, dass auch die Auslegung der Einrichtung vereinfacht wird.

In einer vorteilhaften Ausgestaltung umfasst die zweite Kavitationsreaktoreinrichtung in der Anlage den ersten Kavitationsreaktor und zusätzlich einen zweiten Kavitationsreaktor mit einem zweiten, rohrförmigen Gehäuse, in dem ein schwer umströmbarer Reaktormodul unter Bildung eines Ringraumes zwischen dem Reaktormodul und dem Gehäuse über eine Halterung angeordnet ist, wobei der Reaktormodul mehrere schwer umströmbare Scheibenelemente, die jeweils eine lokale Strömungseinengung bilden und von einender beabstandet sind, und Zwischenscheiben zwischen den Scheibenelementen aufweist. Bei der zweiten Kavitationsreaktoreinrichtung ist vorteilhaft, dass in dem ersten Kavitationsreaktor eine sehr intensive Behandlung der Substanz stattfindet, während in dem nachgeschalteten, zweiten Kavitationsreaktor eine schonende Nachbehandlung stattfindet, sodass die Durchmischung der Komponenten der Substanz optimiert und eventuell ablaufende Reaktionen zwischen Reaktionskomponenten der Substanz weitgehend abgeschlossen werden können.

Eine vorteilhafte Ausgestaltung der erfindungsgemäßen Kavitationsreaktorseinrichtung ist dadurch gekennzeichnet, dass die Zulaufeinrichtung ein Zulaufgehäuse mit einem mittigen Zulaufkanal aufweist, der sich von einer eintrittsseitigen Zulauföffnung aus mit einem in Strömungsrichtung trichterförmig ausgebildeten Erweiterungsabschnitt bis zu dem rohrförmigen Gehäuse erstreckt. In dem trichterförmigen Erweiterungsabschnitt des Zulaufkanals findet in vorteilhafter Weise bereits eine Behandlung der Substanz als Vorbereitung zu der intensiveren Behandlung in dem Reaktionsraum statt., sodass der Raum zwischen der Zulaufeinrichtung und dem Düsenkopf optimal für die Behandlung der Substanz genutzt werden kann.

Eine weitere vorteilhafte Ausgestaltung der erfindungsgemäßen Kavitationsreaktorseinrichtung ist dadurch gekennzeichnet, dass der Zulaufkanal eintrittsseitig einen zylindrischen Kanalabschnitt aufweist, an den sich in Strömungsrichtung der Erweiterungsabschnitt anschließt, wobei die Zulaufeinrichtung eine mittig in das Gehäuse gerichtete Strömung der Haupt-Komponente abgibt. Durch den zylindrischen Kanalabschnitt wird die aus dem Kanalabschnitt austretende Hauptkomponente zu einem mittigen Strahl geformt, der in dem Erweiterungsabschnitt der Zulaufeinrichtung radialgerichtete Bewegungskomponenten erhält und damit bereits für eine Verkörperung der Haupt-Komponenten sorgt, sodass der Ablauf der Kavität bereits beim Eintritt in den Reaktionsraum begünstigt wird.

Eine weitere vorteilhafte Ausgestaltung der erfindungsgemäßen Kavitationsreaktorseinrichtung ist dadurch gekennzeichnet, dass das Zulaufgehäuse mehrere parallel zur Strömungsrichtung verlaufende Hilfs-Zulaufkanäle aufweist, die eintrittsseitig unter radialen Abständen zu dem Zulaufkanal liegen und in dem konischen Erweiterungsabschnitt enden. In Versuchen hat sich gezeigt, dass die Hilfs-Zulaufkanäle zu einer noch stärkeren Verwirbelung und Vermischung der Reaktions-Komponenten in dem Reaktionsraum führt, indem dort Wirbelströme entstehen. Andererseits kann beim Einsatz der Hilfs-Zulaufkanäle der zum Betreiben der Vorrichtung erforderliche Druck deutlich herabgesetzt werden. Während eine Vorrichtung ohne die Hilfs-Zulaufkanäle beispielsweise 8 bar benötigt, kommt die Vorrichtung mit den Hilfs-Zulaufkanälen mit 0,8 bar aus, was für das Betreiben der Vorrichtung außerordentlich vorteilhaft ist.

Eine weitere vorteilhafte Ausgestaltung der erfindungsgemäßen Kavitationsreaktorseinrichtung ist dadurch gekennzeichnet, dass in der Mitte des Düsenkopfes eine Prallfläche ohne Kanäle für den von der Zulaufeinrichtung abgegebenen Strahl vorgesehen ist. Indem der aus der Zulaufeinrichtung austretende Strahl nicht auf einen Kanal in dem Düsenkopf, sondern auf die Prallfläche auftrifft, wird die Strömungsumkehr des aus der Zulaufeinrichtung austretenden Strahles mit Sicherheit erreicht. Außerdem trifft das Strömungsmittel, das aus den Kanälen des Düsenkopfes austritt, in einem Bereich seitlich von dem von der Zulaufeinrichtung abgegebenen Hauptstrahl auf die rückläufige Strömung auf, was die Strömungskinetik in dem Reaktionsraum verbessert.

Eine weitere vorteilhafte Ausgestaltung der erfindungsgemäßen Kavitationsreaktorseinrichtung ist dadurch gekennzeichnet, dass die Kanäle des Düsenkopfes außerhalb der Prallfläche auf Kreisen mit unterschiedlichen Radien zu der Mittelachse des Düsenkopfes angeordnet sind. Dadurch wird eine gleichmäßige flächige Verteilung der Mündungen der Kanäle in dem Düsenkopf erreicht, was eine ebenso vorteilhafte flächige Verteilung der aus den Kanälen austretenden Strömungsmittel bewirkt.

Eine weitere vorteilhafte Ausgestaltung der erfindungsgemäßen Kavitationsreaktorseinrichtung ist dadurch gekennzeichnet, dass die Mündungen der Kanäle auf einer Einhüllendenfläche liegen, die sich von der Prallfläche in Richtung zu der Zulaufeinrichtung hin erweiternd zu einem äußeren Rand des Düsenkopfes erstreckt, wobei die Einhüllendenfläche vorzugsweise eine becherförmige, weiter bevorzugt eine konische Fläche ist. Bei dieser Anordnung wird nicht nur eine großflächige, sondern auch eine räumliche Verteilung der Mündungen der Kanäle in dem Düsenkopf erreicht, was zu einer weiteren Verbesserung der Durchmischung der aus den Kanälen austretenden Strömungen mit der von der Zulaufeinrichtung kommenden Strömung führt.

Eine weitere vorteilhafte Ausgestaltung der erfindungsgemäßen Kavitationsreaktorseinrichtung ist dadurch gekennzeichnet, dass der Düsenkopf auf einer Halterung gelagert ist, die eine mittige Durchtrittsöffnung für die Einleitung der Zugabe-Komponente in den Düsenkopf aufweist, wobei die Durchtrittsöffnung über Verbindungskanäle mit jeweils einer Einlassöffnung zur Zufuhr jeweils einer Zugabe-Komponente in die Verbindungskanäle verbunden ist. Im Falle von mehreren Zugabe-Komponenten werden in vorteilhafter Weise diese bereits in den Verbindungskanälen vor gemischt und dann gemeinsam durch den Düsenkopf in den Reaktionsraum zugeführt.

Eine weitere vorteilhafte Ausgestaltung der erfindungsgemäßen Kavitationsreaktorseinrichtung ist dadurch gekennzeichnet, dass die Scheibenelemente jeweils mehrere radial verlaufende, durch das jeweilige Scheibenelement hindurch gehende Schlitze aufweist, und dass die Zwischenascheiben die Schlitze der Scheibenelemente wenigstens teilweise überdecken. Durch das Maß der Überdeckung der Schlitze durch die Zwischenscheiben wird in vorteilhafter Weise, wie Experimente nachgewiesen haben, das Ausmaß der Zerkleinerung von in der Substanz enthaltenen Festteilchen oder Zusammenballungen beeinflusst in dem Sinne, dass mit zunehmender Überdeckung die Größe der erzeugten Festteilchen oder Zusammenballungen kleiner wird. So werden beispielsweise Farben-Pasten behandelt, die bekanntlich feste Teilchen als Pigment enthalten.

Eine weitere vorteilhafte Ausgestaltung der erfindungsgemäßen Kavitationsreaktorseinrichtung ist dadurch gekennzeichnet, dass das Scheibenelement eine Scheibe umfasst, die an ihrem Umfang eine unter einem Winkel zu der Scheibe stehende Umfangsfläche hat, die eine Spitze bildet, die im Einbauzustand auf der stromab liegenden Seite des Scheibenelementes zu liegen kommt. Diese Ausgestaltung des Scheibenelements mit der Spitze trägt in vorteilhafter Weise zu einer weiteren Erhöhung der Kavitation in der Umgebung deren Spitzen bei.

Eine weitere vorteilhafte Ausgestaltung der erfindungsgemäßen Kavitationsreaktorseinrichtung ist dadurch gekennzeichnet, dass die Scheibenelemente und die Zwischenscheiben an einem Bolzen gestapelt und befestigt sind, der über die Halterung mit dem Gehäuse verbunden ist. Dadurch wird in vorteilhafter Weise der vorstehend erwähnte Austausch der Zwischenscheiben einfach gestaltet.

Eine weitere vorteilhafte Ausgestaltung der erfindungsgemäßen Kavitationsreaktorseinrichtung ist dadurch gekennzeichnet, dass der Reaktormodul zwei Teilbereiche umfasst, wobei die Scheibenelemente des stromauf liegenden Teilbereichs weiter von dem Gehäuse beabstandet sind als in dem stromab liegenden und daneben angeordneten Teilbereich. Dadurch ergibt sich an dem stromauf liegenden Teilbereich ein Ringraum oder Durchflussraum mit einer größeren Querschnittsfläche als der Ringraum oder Durchflussraum an dem stromab liegenden Teilbereich, wobei in vorteilhafter Weise der Übergang an dem kleineren Ringraum ein Rückstau entsteht, indem ein Teil der Strömung der Substanz in der Haupt Flussrichtung weitergeleitet und ein Teil der Strömung der Substanz im Rückstau entgegen der Hauptflussrichtung geleitet wird, wobei die Fließgeschwindigkeiten von der Querschnittsfläche der entsprechenden Regenräume zwischen den Teilbereichen und den gegenüberliegenden Wandbereichen beeinflusst werden. Dadurch wird eine zusätzliche Intensivierung der Kavitation in der Substanz erreicht.

Rohöl, ist bekanntlich stark mit Fremdstoffen belastet und enthält Bestandteile wie Teer, Wachs und Schwefel in größeren Mengen. Beim Durchlauf des Rohöls durch die Kavitationsreaktor oder durch eine Kombination der beiden Kavitationsreaktoren werden die Bestandteile des Rohöls, zwischen denen keine Reaktion stattfindet, miteinander vermischt und homogenisiert, während die Komponenten, zwischen denen eine Reaktion stattfindet, beispielweise Schwefelverbindungen, die mit zugeführtem Ozon oder Wasserstoff-Peroxyd reagiert, in Substanzen umgesetzt werden, die danach aus dem Rohöl abgetrennt werden können..

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen und in der Zeichnung werden die in der unten aufgeführten Liste der Bezugszeichen verwendeten Begriffe und zugeordneten Bezugszeichen verwendet.

Es zeigen:
- Figur 1: eine Anlage zur Behandlung von Rohöl, bei der
- Figur 2: einen schematischen Schnitt durch ein Ausführungsbeispiel des Kavitationsreaktors;
- Figur 3: eine Draufsicht auf einen Düsenkopf mit Blickrichtung entlang der Hauptströmungsrichtung;
- Figur 4: einen Schnitt durch den Düsenkopf von Figur 3 entlang der Linie A - A;
- Figur 5: eine Draufsicht auf eine Halterung für den Düsenkopf; und
- Figur 6:: einen Schnitt durch die Halterung für den Düsenkopf.
- Figur 7: einen Schnitt durch ein Ausführungsbeispiels des Kavitationsreaktors;
- Figur 8: eine Draufsicht auf ein in dem Reaktormodul von Figur 7 verwendetes Scheibenelement mit Blickrichtung von unten in Figur 2;
- Figur 9A: einen Schnitt durch das Scheibenelement entlang einer Schnittlinie A -A in Figur 7;
- Figur 9B: einen Schnitt durch das Scheibenelement entlang einer Schnittlinie B - B in Figur 7;
- Figur 10: einen Schnitt durch eine Kombination aus dem ersten und dem zweiten Kavitationsreaktor.

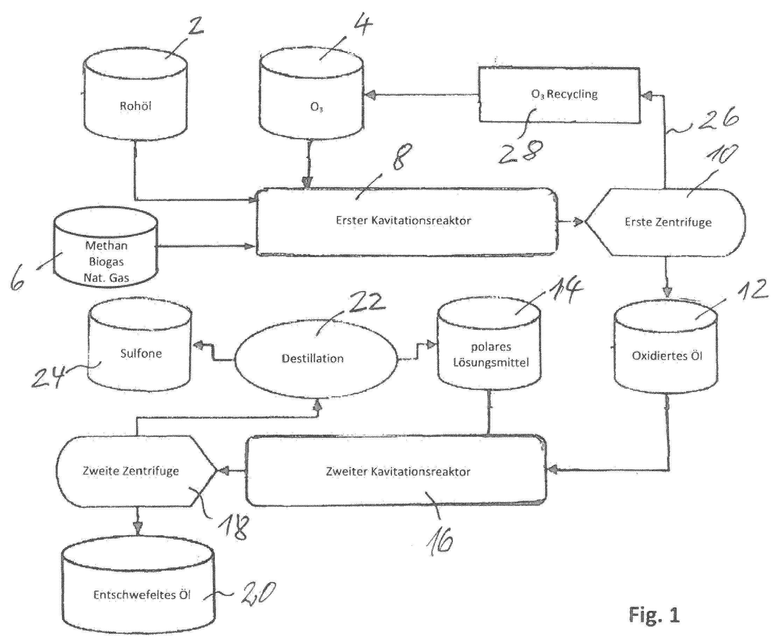

Eine Anlage zur Behandlung von Rohöl nach Figur 1 umfasst einen Vorratsbehälter 2 für das Rohöl und Vorratsbehälter 4, 6 für eine oder mehrere Zugabe-Komponente(n), ausgewählt aus Ozon, Wasserstoffperoxid, Methangas, Biogas und Erdgas, die mit einer ersten Kavitationsreaktoreinrichtung 8 verbunden sind, in der eine Emulsionsbildung und Oxidation stattfindet. Die erste Kavitationsreaktoreinrichtung ist 8 mit einer ersten Zentrifuge 10 verbunden, in der das von der ersten Kavitationsreaktoreinrichtung 8 abgegebene Produkt zentrifugiert wird, Die erste Zentrifuge 10 ist mit einem Vorratsbehälter 12 für das oxidierte Produkt verbunden. Der Vorratsbehälter 12 für das oxidierte Produkt und ein Vorratsbehälter 14 für ein polares Lösungsmittel sind mit einer zweiten Kavitationsreaktoreinrichtung 16 verbunden, in der eine Emulsionsbildung und Extraktion stattfindet. Die zweite Kavitationsreaktoreinrichtung 16 ist mit einer zweiten Zentrifuge 18 verbunden, in der das oxidierte Produkt entschwefelt wird und die mit einem Vorratsbehälter 20 für das entschwefelte Produkt und mit einer Destillationseinrichtung 22 verbunden ist, in der das entschwefelte Produkt weiterverarbeitet wird.

Die Destillationseinrichtung 22 ist mit einem Speicherbehälter 24 für Sulfone und mit dem Vorratsbehälter 14 für das polare Lösungsmittel verbunden, wobei in dem Speicherbehälter 24 das abgetrennte Sulfon gespeichert und das in der Destillationseinrichtung 22 abgetrennte polare Lösungsmittel in den Vorratsbehälter 14 für das polare Lösungsmittel zurück geführt wird.

Die erste Zentrifuge 8 ist über eine Rückführungsleitung 26 mit einer Recyclingschleife 28 für die Zugabe-Komponente verbunden, die ihrerseits zu dem Vorratsbehälter 4 für die Zugabe Komponente führt.

Um die Effizienz einer derartigen Anlage zu optimieren, werden die unten beschriebenen Kavitationsreaktor bzw. Kavitationsreaktoreinrichtungen eingesetzt.

### Erster Kavitationsreaktor I

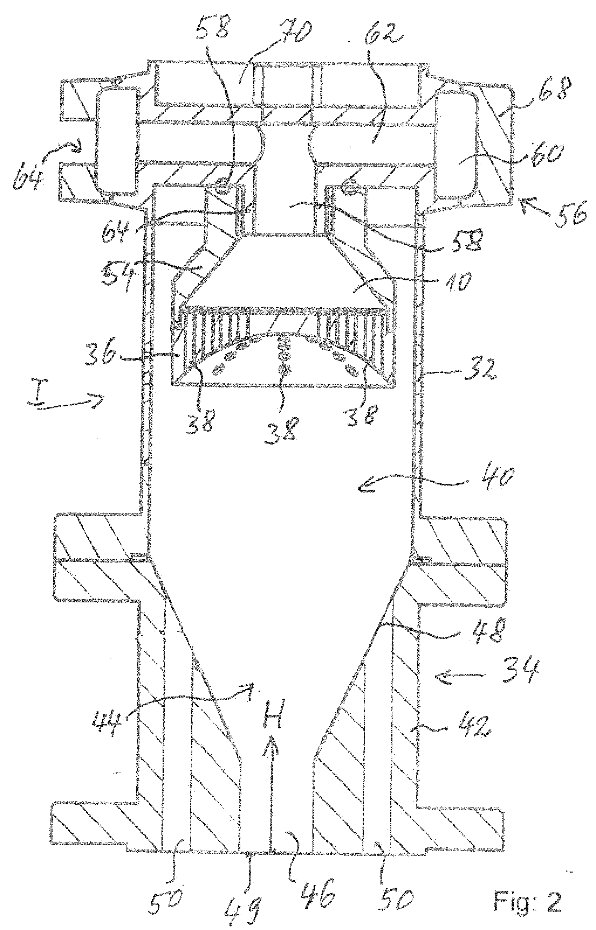

Figur 2 zeigt einen ersten Kavitationsreaktor I zum Behandeln von fließfähigen Substanzen, wobei dem Kavitationsreaktor wenigstens zwei Komponenten zugeführt, gemischt und/oder zur Reaktion gebracht werden sollen

Der erste Kavitationsreaktor umfasst ein rohrförmiges Gehäuse 32, das als zylindrisches Rohr ausgebildet ist und mit dem in Strömungsrichtung H stromab eine Zulaufeinrichtung 34 verbunden ist, die die zugeführte Haupt- Komponente abgibt. In dem Gehäuse 32 ist ein Düsenkopf 36 angeordnet, der der Zulaufeinrichtung 34 mittig gegenüberliegt. Der Düsenkopf 36 hat mehrere Kanäle 38, deren Mündungen unter unterschiedlichen radialen Abständen zu einer Mittelachse des Düsenkopfes 36 liegen und zur Abgabe einer Zugabe-Komponente oder mehrerer Zugabe-Komponenten entgegen der Strömungsrichtung H der Haupt-Komponente einen Reaktionsraum 40 dienen, der durch die Beabstandung der Zulaufeinrichtung 34 von dem Düsenkopf 36 in dem Gehäuse 32 gebildet wird. Die Kanäle 38 werden über eine Zufuhrkammer 10 gespeist.

Die Zulaufeinrichtung 34 hat in einem Zulaufgehäuse 42 einen mittigen Zulaufkanal 44, der eintrittsseitig einen zylindrischen Kanalabschnitt 46 und einen daran in Strömungsrichtung H anschließenden, im Querschnitt konischen Erweiterungsabschnitt 48 aufweist, der bis zu dem rohrförmigen Gehäuse 32 reicht. Die Haupt-Komponente wird durch eine Eintrittsmündung 49 in den Kanalabschnitt 46 eingeleitet.

Das Zulaufgehäuse 42 hat mehrere, beispielsweise vier, parallel zur Strömungsrichtung H verlaufende Hilfs-Zufuhrkanäle 50, die eintrittsseitig unter radialen Abständen zu dem Kanalabschnitt 46 liegen und in dem konischen Erweiterungsabschnitt 48 enden.

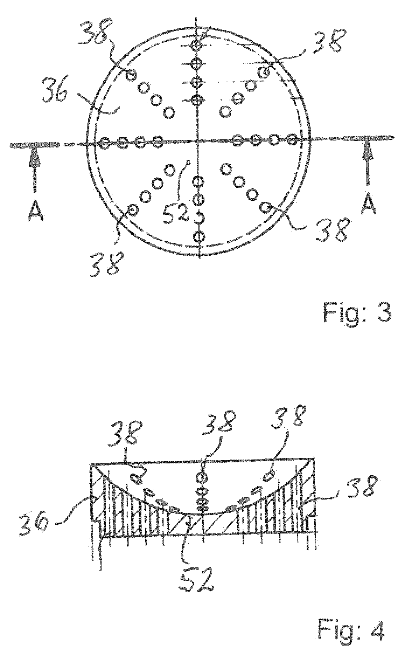

Wie aus den Figuren 3 und 4 zu ersehen ist, ist in der Mitte des Düsenkopfes 36 eine Prallfläche 52 ohne Kanäle für den von der Zulaufeinrichtung 34 abgegebenen Strahl vorgesehen. Die Kanäle 38 des Düsenkopfes 36 außerhalb der Prallfläche 52 sind auf Kreisen mit unterschiedlichen Radien zu der Mittelachse des Düsenkopfes 36 angeordnet. Ferner liegen die Mündungen der Kanäle 38 auf einer Einhüllendenfläche, die eine becherförmige, vorzugsweise konische Fläche ist und die sich von der Prallfläche 52 in Richtung zu der Zulaufeinrichtung 34 hin erweiternd zu einem äußeren Rand des Düsenkopfes 36 erstreckt.

Der Düsenkopf 36 ist austauschbar, indem der Düsenkopf 36 über einen Sockel 54 auf einer Halterung 56 gelagert ist, die eine mittige Durchtrittsöffnung 58 für die Einleitung der Zugabe-Komponente(n) in den Düsenkopf 36 aufweist, wobei die Durchtrittsöffnung 58 über Verbindungskanäle 60, 62 mit einer Einlassöffnung 64 oder mehreren Eintrittsöffnungen im Fall von mehreren Zugabe-Komponenten zur Zufuhr der Zugabe-Komponente(n) an die Verbindungskanäle 60, 62 verbunden ist. Wenn mehrere Zugabe-Komponenten eingesetzt werden, ist jeweils eine Einlassöffnung zur Zufuhr jeweils einer Zugabe-Komponente vorgesehen. Der Sockel 54 ist auf einen Bund 64 der Halterung 56 aufgesetzt und über eine Ringdichtung 58 abgedichtet.

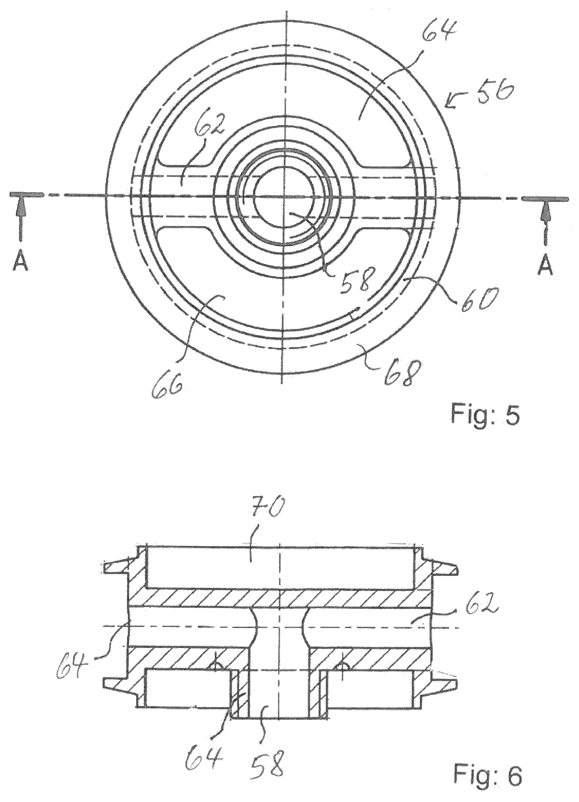

In Figur 5 ist eine Draufsicht auf die Halterung 56 mit dem Sockel 54 des Düsenkopfes 36 gezeigt. Die Verbindungskanäle 60, 62 umfassen einen Ringskanal 60, mit dem die Einlassöffnung(en) verbunden ist/sind, und einen diagonal zu der Halterung 56 verlaufenden, geraden Verbindungskanal 62, wobei der Verbindungskanal 62 den Ringskanal 60 mit der Durchtrittsöffnung 58 verbindet. Die in Figur 2 im Schnitt gezeigten Verbindungskanäle 60, 62 sind in Figur 5 durch gestrichelte Linien angedeutet. Aus Figur 5 ist ferner zu ersehen, dass die fließfähige Substanz durch Austrittsöffnungen 64, 66 aus dem Kavitationsreaktor austreten kann.

In Figur 6 ist ein Schnitt durch einen Teil der Halterung 56 des Düsenkopfes 36 darstellt, welcher durch einen Außenring 68, der in den Figuren 2 und 5 gezeigt ist, zur kompletten Halterung 56 vervollständigt wird. Die behandelte die fließfähige Substanz verlässt den Kavitationsreaktor über die Austrittsöffnungen 64, 66 und eine Haupt-Austrittsöffnung 70.

### Zweiter Kavitationsreaktor II

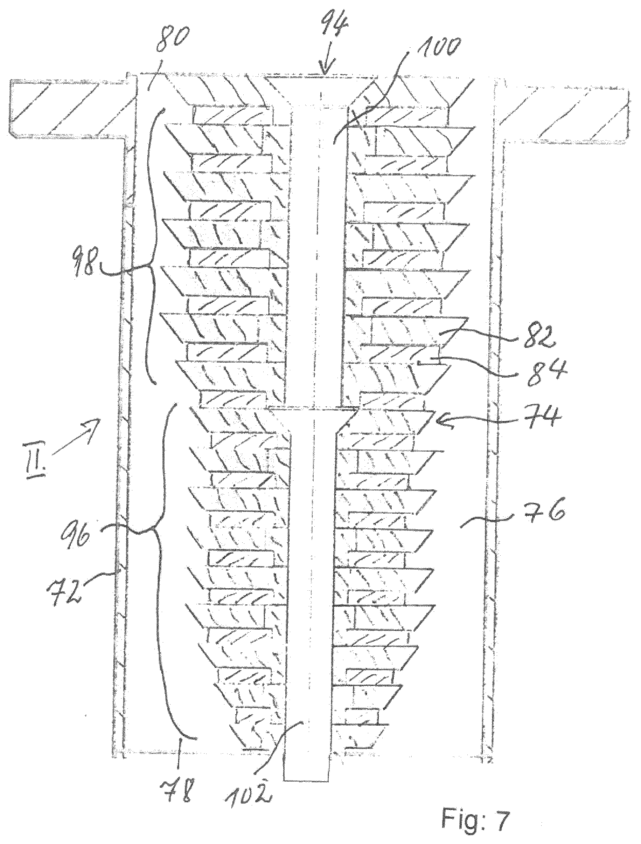

Figur 7 zeigt eine Schnittdarstellung eines zweiten Kavitationsreaktors II zum Behandeln von Rohöl mittels Kavitation. Der Kavitationsreaktor II hat ein rohrförmiges Gehäuse 72, in dem ein schwer umströmbaren Reaktormodul 74 unter Bildung eines Ringraumes 76 zwischen dem Reaktormodul 74 und dem Gehäuse 72 angeordnet ist. Der Kavitationsreaktor II hat eine Eingangsöffnung 78 für die Zufuhr der zu vermischenden und/oder miteinander zur Reaktion zu bringenden Komponenten der Substanzen und eine Ausgangsöffnung 80 für die Abgabe des aus der behandelten Substanz bestehenden Massestroms.

Der Reaktormodul 74 umfasst mehrere schwer umströmbare Scheibenelemente 82, die jeweils mit dem Gehäuse 72 eine lokale Strömungseinengung bilden und von einander beabstandet sind, und Zwischenscheiben 84 zwischen den Scheibenelementen 82.

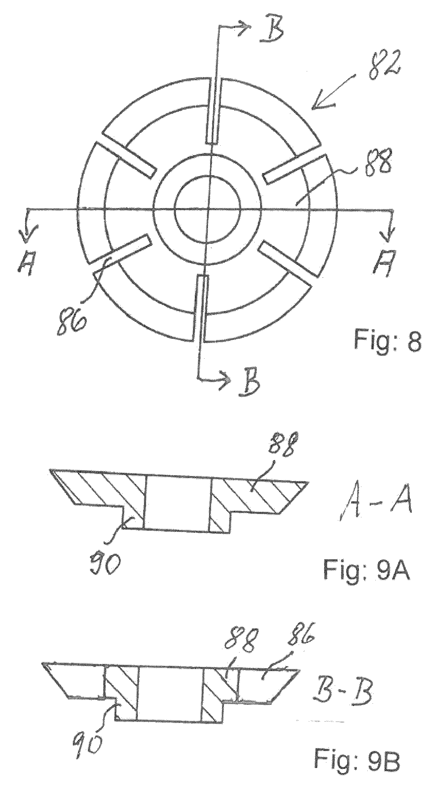

In Figur 8 ist ein Scheibenelement 82 in Draufsicht gezeigt, während Figur 9A einen Schnitt entlang der Schnittlinie A - A und Figur 9B einen Schnitt entlang der Schnittlinie B - B durch das Scheibenelement 82 nach Figur 8 zeigen. Das Scheibenelement 82 hat mehrere radial verlaufende durch das Scheibenelement 82 hindurch gehende Schlitze 86, wie in den Figuren 8 und 9B gezeigt ist. Die Scheibenelemente 82 haben jeweils eine Scheibe 88 und einen Sockel 90.

Das Scheibenelement 82 hat an seinem Umfang eine unter einem Winkel zu der Scheibe 88 stehende Umfangsfläche 91, die eine Spitze 93 bildet, die im Einbauzustand auf der stromab liegenden Seite des Scheibenelementes 82 zu liegen kommt.

Die Zwischenscheiben 84 haben keine Schlitze und überdecken die Schlitze 86 der Scheibenelemente 82 wenigstens teilweise. Die Scheibenelemente 82 und die Zwischenscheiben 84 sind an einem Bolzen 94 gestapelt und befestigt, mit dem sie über eine Halterung (nicht gezeigt) mit dem Gehäuse 72 zu verbinden sind.

Der Reaktormodul 74 nach Figur 7 hat zwei Teilbereiche 96, 98, wobei die Scheibenelemente 82 des stromauf liegenden, ersten Teilbereichs 96 weiter von dem Gehäuse 72 beabstandet sind als die Scheibenelemente 82 in dem stromab liegenden und daneben angeordneten, zweiten Teilbereich 98. In diesem Fall ist der Bolzen 94 zweigeteilt, wobei jeder Teilbereich 96, 98 einen Bolzenabschnitt 100, 102 hat und wobei die Bolzenabschnitte 100, 102 miteinander verbunden sind.

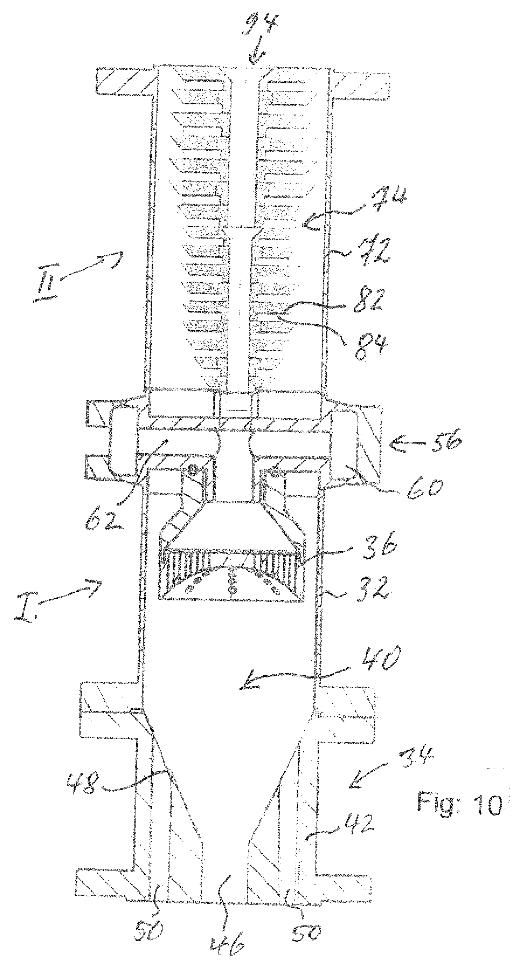

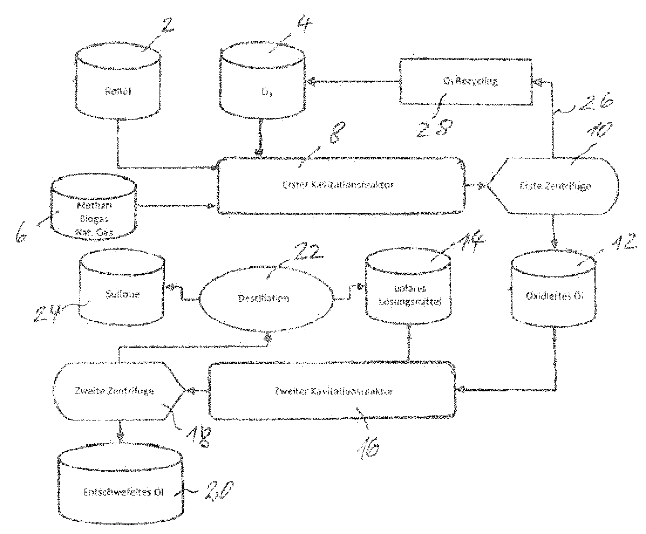

Figur 10 zeigt einen Schnitt durch die Kavitationsreaktoreinrichtung, die eine Kombination aus dem ersten und dem zweiten Kavitationsreaktor ist und zum Behandeln von fließfähigen Substanzen dient, wobei der Kavitationsreaktoreinrichtung wenigstens zwei Komponenten zugeführt, gemischt und/oder zur Reaktion gebracht werden. Die Kavitationsreaktoreinrichtung nach Figur 10 umfasst einen ersten Kavitationsreaktor I mit einem ersten, rohrförmigen Gehäuse 32, mit dem in Strömungsrichtung (H) stromab eine Zulaufeinrichtung 34 verbunden ist, die eine zugeführte Haupt-Komponente als mittig in dem Gehäuse 32 verlaufenden Strahl in Strömungsrichtung H abgibt, und in dem ein der Zulaufeinrichtung 34 mittig gegenüberliegender Düsenkopf 36 angeordnet sind, der mehrere Kanäle aufweist, deren Mündungen unter unterschiedlichen radialen Abständen zu einer Mittelachse des Düsenkopfes 36 liegen und durch die wenigstens eine Zugabe-Komponente entgegen der Strömungsrichtung H der Haupt-Komponente zuzuführen ist, wobei durch die Beabstandung der Zulaufeinrichtung 34 von dem Düsenkopf 36 ein Reaktionsraum 40 in dem Gehäuse 32 gebildet ist. Die Kavitationsreaktoreinrichtung nach Figur 10 umfasst ferner einen zweiten Kavitationsreaktor II mit einem zweiten, rohrförmigen Gehäuse 72, in dem ein schwer umströmbaren Reaktormodul 74 unter Bildung eines Ringraumes 76 zwischen dem Reaktormodul 74 und dem Gehäuse 72 über eine Halterung angeordnet ist, wobei der Reaktormodul 74 mehrere schwer umströmbare Scheibenelemente 82, die jeweils eine lokale Strömungseinengung bilden und von einender beabstandet sind, und Zwischenscheiben 84 zwischen den Scheibenelementen 82 aufweist.

## Patentansprüche

1. Anlage zur Behandlung von Rohöl, bei der
ein Vorratsbehälter (2) für das Rohöl und einer oder mehrere Vorratsbehälter (4, 6) für eine oder mehrere Zugabe-Komponente(n), ausgewählt aus Ozon, Wasserstoffperoxid, Methangas, Biogas und Erdgas, mit einer ersten Kavitationsreaktoreinrichtung (8) verbunden sind, in der eine Emulsionsbildung und Oxidation stattfindet, bei der
die erste Kavitationsreaktoreinrichtung (8) mit einer ersten Zentrifuge (10) verbunden ist, in der das von der ersten Kavitationsreaktoreinrichtung (8) abgegebene Produkt zentrifugiert wird,
bei der die erste Zentrifuge (10) mit einem Vorratsbehälter (12) für das oxidierte Produkt verbunden ist, bei der
ein Vorratsbehälter (12) für das oxidierte Produkt und ein Vorratsbehälter (14) für ein polares Lösungsmittel mit einer zweiten Kavitationsreaktoreinrichtung (16) verbunden sind, in der eine Emulsionsbildung und Extraktion stattfindet, und bei der
die zweite Kavitationsreaktoreinrichtung (16) mit einer zweiten Zentrifuge (18) verbunden ist, in der das oxidierte Produkt entschwefelt wird und die mit einem Vorratsbehälter (20) für das entschwefelte Produkt und mit einer Destillationseinrichtung (22) verbunden ist, in der das entschwefelte Produkt weiterverarbeitet wird.

2. Anlage nach Anspruch 1, **dadurch gekennzeichnet, dass** die Destillationseinrichtung (22) mit einem Speicherbehälter (24) für Sulfone und mit dem Vorratsbehälter (14) für das polare Lösungsmittel verbunden ist, wobei in dem Speicherbehälter (24) das abgetrennte Sulfon gespeichert und das in der Destillationseinrichtung (22) abgetrennte polare Lösungsmittel in den Vorratsbehälter (14) für das polare Lösungsmittel zurück geführt wird.

3. Anlage nach Anspruch 1, **dadurch gekennzeichnet, dass** die erste Zentrifuge (10) über eine Rückführungsleitung (26) mit einer Recyclingschleife (28) für die Zugabe-Komponente verbunden ist, die ihrerseits zu dem Vorratsbehälter (4) für die Zugabe Komponente führt.

4. Anlage nach Anspruch 1, **dadurch gekennzeichnet, dass** die erste und/oder die zweite Kavitationsreaktoreinrichtung einen ersten Kavitationsreaktor mit einem ersten, rohrförmigen Gehäuse (32), mit dem in Strömungsrichtung (H) stromab eine Zulaufeinrichtung (34) verbunden ist, die eine zugeführte Haupt-Komponente als mittig in dem Gehäuse (32) verlaufenden Strahl in Strömungsrichtung (H) abgibt, und in dem ein der Zulaufeinrichtung (34) mittig gegenüberliegender Düsenkopf (36) angeordnet sind, der mehrere Kanäle aufweist, deren Mündungen unter unterschiedlichen radialen Abständen zu einer Mittelachse des Düsenkopfes (36) liegen und durch die wenigstens eine Zugabe-Komponente entgegen der Strömungsrichtung (H) der Haupt-Komponente zuzuführen ist, wobei durch die Beabstandung der Zulaufeinrichtung (34) von dem Düsenkopf (36) ein Reaktionsraum (40) in dem Gehäuse (32) gebildet ist.

5. Anlage nach Anspruch 4, **dadurch gekennzeichnet, dass** die Anlage den ersten Kavitationsreaktor und zusätzlich einen zweiten Kavitationsreaktor umfasst mit einem zweiten, rohrförmigen Gehäuse (72), in dem ein schwer umströmbaren Reaktormodul (74) unter Bildung eines Ringraumes (76) zwischen dem Reaktormodul (74) und dem Gehäuse (72) über eine Halterung angeordnet ist, wobei der Reaktormodul (74) mehrere schwer umströmbare Scheibenelemente (82), die jeweils eine lokale Strömungseinengung bilden und von einender beabstandet sind, und Zwischenscheiben (84) zwischen den Scheibenelementen (82) aufweist.

6. Anlage nach Anspruch 4, **dadurch gekennzeichnet**, **dadurch gekennzeichnet, dass** die Zulaufeinrichtung (34) ein Zulaufgehäuse (32) mit einem mittigen Zulaufkanal (44) aufweist, der sich von einer eintrittsseitigen Zulauföffnung (47) aus mit einem in Strömungsrichtung (H) trichterförmig ausgebildeten Erweiterungsabschnitt (48) bis zu dem rohrförmigen Gehäuse (32) erstreckt.

7. Anlage nach Anspruch 6, **dadurch gekennzeichnet**, **dadurch gekennzeichnet, dass** der Zulaufkanal (44) eintrittsseitig einen zylindrischen Kanalabschnitt (46) aufweist, an den sich in Strömungsrichtung (H) der Erweiterungsabschnitt (48) anschließt, wobei die Zulaufeinrichtung (34) eine mittig in das Gehäuse (32) gerichtete Strömung der Haupt-Komponente abgibt.

8. Anlage nach Anspruch 6 oder 7, **dadurch gekennzeichnet**, **dadurch gekennzeichnet, dass** das Zulaufgehäuse (42) mehrere parallel zur Strömungsrichtung (H) verlaufende Hilfs-Zulaufkanäle (50) aufweist, die eintrittsseitig unter radialen Abständen zu dem mittigen Zulaufkanal (44) liegen und in dem konischen Erweiterungsabschnitt (48) enden.

9. Anlage nach Anspruch 6, **dadurch gekennzeichnet**, **dadurch gekennzeichnet, dass** in der Mitte des Düsenkopfes (36) eine Prallfläche (52) ohne Kanäle für die von der Zulaufeinrichtung (34) abgegebenen Strömung vorgesehen ist.

10. Anlage nach Anspruch 9, **dadurch gekennzeichnet**, **dadurch gekennzeichnet, dass** die Kanäle (38) des Düsenkopfes (36) außerhalb der Prallfläche (52) auf Kreisen mit unterschiedlichen Radien zu der Mittelachse des Düsenkopfes (36) angeordnet sind.

11. Anlage nach Anspruch 10, **dadurch gekennzeichnet, dass** die Mündungen der Kanäle (38) auf einer Einhüllendenfläche liegen, die sich von der Prallfläche (52) in Richtung zu der Zulaufeinrichtung (34) hin erweiternd zu einem äußeren Rand des Düsenkopfes (36) erstreckt.

12. Anlage nach Anspruch 6, **dadurch gekennzeichnet, dass** der Düsenkopf (36) auf einer Halterung (56) gelagert ist, die eine mittige Durchtrittsöffnung (58) für die Einleitung der Zugabe-Komponente(n) in den Düsenkopf (36) aufweist, wobei die Durchtrittsöffnung (58) über Verbindungskanäle (60,62) mit jeweils einer Einlassöffnung (64) zur Zufuhr jeweils einer Zugabe-Komponente in die Verbindungskanäle (60,62) verbunden ist.

13. Kavitationsreaktorreinrichtung nach Anspruch 5, **dadurch gekennzeichnet**, **dadurch gekennzeichnet, dass** die Scheibenelemente (82) jeweils mehrere radial verlaufende durch das jeweilige Scheibenelement (82) hindurch gehende Schlitze (86) aufweist, und dass die Zwischenascheiben (84) die Schlitze (86) der Scheibenelemente (82) wenigstens teilweise überdecken.

14. Kavitationsreaktorreinrichtung nach Anspruch 13, **dadurch gekennzeichnet, dass** das Scheibenelement (82) eine Scheibe (88) umfasst, die an ihrem Umfang eine unter einem Winkel zu der Scheibe (88) stehende Umfangsfläche (91) hat, die eine Spitze (93) bildet, die im Einbauzustand auf der stromab liegenden Seite des Scheibenelementes (82) zu liegen kommt.

15. Anlage nach einem der Ansprüche 5, 13 oder 14, **dadurch gekennzeichnet**, **dadurch gekennzeichnet, dass** die Scheibenelemente (82) und die Zwischenscheiben (84) an einem Bolzen (94) gestapelt und befestigt sind, der über die Halterung mit dem Gehäuse (72) verbunden ist.

16. Anlage nach Anspruch 5, **dadurch gekennzeichnet**, **dadurch gekennzeichnet, dass** der Reaktormodul (74) zwei Teilbereiche (96,98) umfasst, wobei die Scheibenelemente (82) des stromauf liegenden Teilbereichs (96) weiter von dem Gehäuse (72) beabstandet sind als in dem stromab liegenden und daneben angeordneten Teilbereich (98).
